# EUROPEAN PATENT SPECIFICATION

(11) **EP 3 546 245 B1**
(45) Date of publication and mention of the grant of the patent: **30.12.2020**
(21) Application number: 17873666.6
(22) Date of filing: 20.11.2017
(51) Int. Cl.: B60C 9/18, B60C 9/20, B60C 9/26

(54) **TIRE**
REIFEN
PNEUMATIQUE

(30) Priority: 25.11.2016 JP 2016229366
(43) Date of publication of application: 02.10.2019
(73) Proprietor: Bridgestone Corporation, Tokyo 104-8340 (JP)
(72) Inventor: OTA Saki, Tokyo 104-8340 (JP)
(74) Representative: Oxley, Robin John George
(86) International application number: PCT/JP2017/041606
(87) International publication number: WO 2018/097083

(56) References cited:
- EP-A2- 0 887 208
- WO-A1-2016/190152
- JP-A- H09 240 213
- JP-A- H10 217 713
- JP-A- H11 321 222
- JP-A- 2004 001 609
- US-A1- 2006 237 114

## Description

### TECHNICAL FIELD

The present invention relates to a tire, particularly an improvement of a tire which includes, in a crown portion: a spiral cord layer in which an upper layer and a lower layer are formed by spirally winding a reinforcing cord; and an auxiliary belt layer arranged on an outer side in the tire radial direction of the spiral cord layer.

### BACKGROUND ART

A variety of studies have been conducted on tire reinforcing members. For example, as the structure of a belt used as a reinforcing member of a tire for passenger vehicles, a structure in which two or more intersecting belt layers whose reinforcing cord directions intersect with each other are arranged on the outer side in the tire radial direction of a crown portion of a carcass serving as a skeleton member of the tire is commonly adopted. In addition, as another structure of a belt, a configuration in which upper and lower two belt layers are arranged such that their reinforcing cords intersect with each other, the reinforcing cords being folded back at the ends of the respective belt layers and configured to have a spirally wound structure in which the reinforcing cords extend from one belt layer to the other, is also known.

As such a structure, for example, Patent Document 1 discloses a pneumatic radial tire in which a belt structure constituted by an annular core belt layer formed by winding a reinforcing cord at an angle of substantially 0° with respect to the tire circumferential direction and a covering belt layer formed by spirally winding a reinforcing cord around the core belt layer is arranged on the outer peripheral side of a carcass layer in a tread portion, and it is also disclosed therein that a belt protective layer is arranged as required on the outer peripheral side of the belt structure.

### RELATED ART DOCUMENT

PATENT DOCUMENT[Patent Document 1] JP2004-001609A. Attention is drawn to the disclosures of JP H09 240213 and US2006/237114.

### SUMMARY OF THE INVENTION

### PROBLEMS TO BE SOLVED BY THE INVENTION

As disclosed in Patent Document 1, it has been known to arrange a spiral cord layer, which is substantially constituted by upper and lower two layers formed by spirally winding a reinforcing cord, on the outer peripheral side of a carcass layer. However, in such a spiral cord layer, since the reinforcing cords of the upper layer and the lower layer are continuous with one another, the spiral cord layer during traveling exhibits a behavior different from those of ordinary intersecting belt layers formed by laminating two independent belt layers.

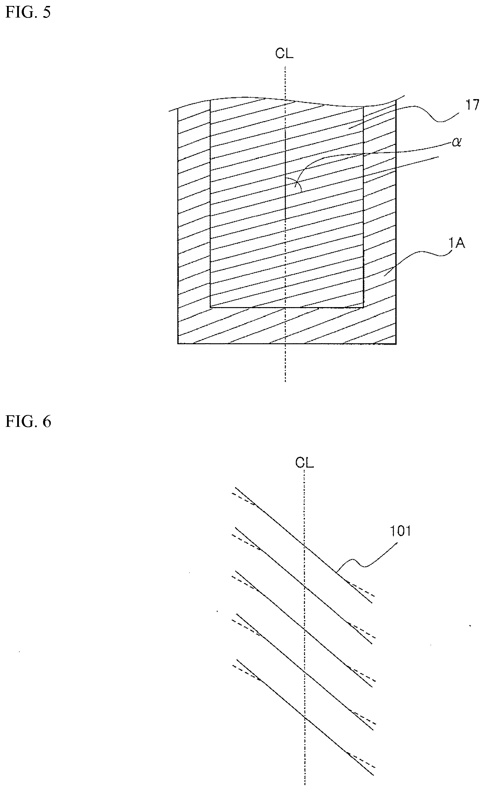

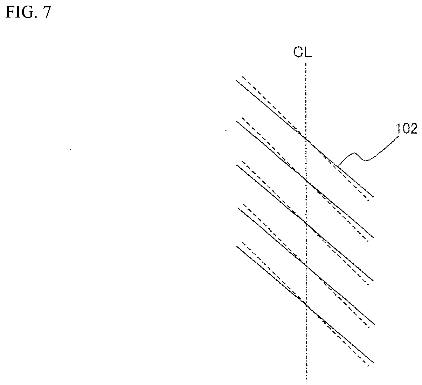

In other words, in ordinary intersecting belt layers, an upper layer and a lower layer are separated at their ends in the tire width direction; therefore, even when inputs are repeatedly applied in the tire circumferential direction during traveling, as illustrated in FIG. 6, substantially only the ends in the tire width direction of a reinforcing cord 101 are displaced in the tire width direction while the angle of the reinforcing cord 101 itself does not change in the vicinity of the center part in the tire width direction near the tire equatorial plane CL. On the other hand, in the case of a spiral cord layer in which the reinforcing cords of an upper layer and a lower layer are continuous with each other, the reinforcing cords impose a stress to each other between the upper and lower layers when inputs are repeatedly applied in the tire circumferential direction during traveling; therefore, as illustrated in FIG. 7, the angle of a reinforcing cord 102 changes over the entirety of the tire width direction centering on the tire equatorial plane CL, as a result of which the whole spiral cord layer is displaced in the tire circumferential direction.

Accordingly, when an auxiliary belt layer is arranged on the outer peripheral side of this spiral cord layer, generation of strains between the spiral cord layer and the auxiliary belt layer causes problems. When an auxiliary belt layer is arranged on intersecting belt layers as described above, since the intersecting belt layers are not displaced as a whole, such generation of interlayer strains does not present a problem and is thus considered as a problem unique to those cases where a spiral cord layer is arranged in place of intersecting belt layers.

When strains are generated between the spiral cord layer and the auxiliary belt layer, the strains induce separation of the layers along the edges of their laminated part, and this may cause a failure. Therefore, a technology for inhibiting such a failure by suppressing the occurrence of separation is demanded.

In view of the above, an object of the present invention is to provide a technology for suppressing, in a tire including a spiral cord layer and an auxiliary belt layer, the occurrence of separation between the spiral cord layer and the auxiliary belt layer.

### MEANS FOR SOLVING THE PROBLEMS

The present inventor intensively studied to solve the above-described problems and consequently discovered that the problems can be solved by defining a spiral cord layer and an auxiliary belt layer, which are adjacent to each other, to each have a prescribed cord inclination direction, thereby completing the present invention.

That is, the tire of the present invention is a tire including: a carcass toroidally extending between a pair of bead portions; a spiral cord layer arranged on an outer side in a tire radial direction of a crown portion of the carcass and in which an upper layer and a lower layerare formed by spirally winding reinforcing cords; and an auxiliary belt layer arranged on the tire radial-direction outer side of the spiral cord layer,
the tire being characterized in that an inclination direction of belt cords of the auxiliary belt layer and an inclination direction of the reinforcing cords of the upper layer of the spiral cord layer are the same when an angle α of the belt cords of the auxiliary belt layer with respect to the tire circumferential direction is 54.7° < α < 90°, and these inclination directions are different when the angle α of the belt cords of the auxiliary belt layer with respect to the tire circumferential direction is 0° < α < 54.7°.

The tire of the present invention also includes a core-material cord layer between the upper layer and the lower layer of the spiral cord layer. Further, in the tire of the present invention, the angle of the reinforcing cords of the spiral cord layer is preferably in a range of 12° to 90° with respect to the tire circumferential direction. Preferably, the core-material cords of the core-material cord layer have an inclination angle of 40° to 90° with respect to the tire circumferential direction.

### EFFECTS OF THE INVENTION

According to the present invention, a tire including a spiral cord layer and an auxiliary belt layer, in which the occurrence of separation between the spiral cord layer and the auxiliary belt layer is suppressed and the occurrence of a failure attributed to the spiral cord layer is thereby inhibited, can be realized.

### BRIEF DESCRIPTION OF THE DRAWINGS

[FIG. 1] FIG. 1 is a cross-sectional view in a tire width direction illustrating one configuration example of a tire for trucks and buses according to the present invention.
[FIG. 2] FIG. 2 is a cross-sectional view in the tire width direction illustrating one configuration example of a tire for passenger vehicles according to the present invention.
[FIG. 3] FIG. 3 is a cross-sectional view in the tire width direction illustrating one configuration example of a tire for construction vehicles according to the present invention.
[FIG. 4] FIG. 4 is a drawing illustrating a relationship between an inclination direction of belt cords of an auxiliary belt layer and an inclination direction of reinforcing cords of an upper layer of a spiral cord layer when an angle α of the belt cords of the auxiliary belt layer with respect to the tire circumferential direction is 0° < α < 54.7°.
[FIG. 5] FIG. 5 is a drawing illustrating a relationship between an inclination direction of belt cords of an auxiliary belt layer and an inclination direction of reinforcing cords of an upper layer of a spiral cord layer when an angle α of the belt cords of the auxiliary belt layer with respect to the tire circumferential direction is 54.7° < α < 90°.
[FIG. 6] FIG. 6 is a drawing illustrating a behavior of an intersecting belt layer to which inputs are repeatedly applied in the tire circumferential direction.
[FIG. 7] FIG. 7 is a drawing illustrating a behavior of a spiral cord layer to which inputs are repeatedly applied in the tire circumferential direction.

### MODE FOR CARRYING OUT THE INVENTION

The present invention will now be described in detail referring to the drawings.

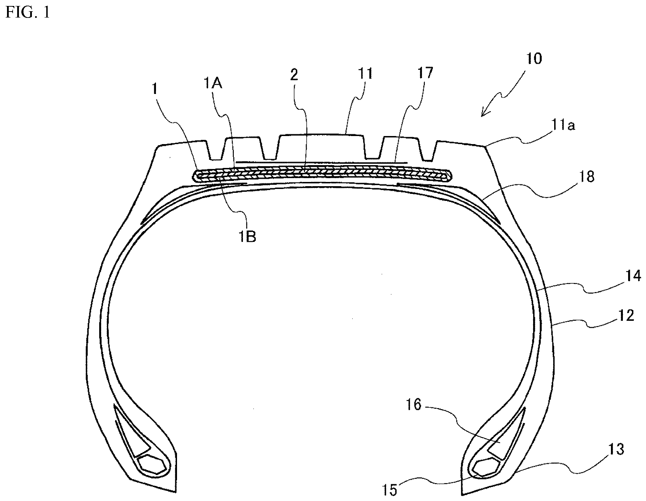

FIG. 1 is a cross-sectional view in a tire width direction illustrating a tire for trucks and buses, which is one example of the tire of the present invention. The illustrated tire 10 includes: a tread portion 11 which forms a ground-contact part; a pair of side wall portions 12 which continuously extend inward in the tire radial direction on both sides of the tread portion 11; and bead portions 13 which continuously extend on an inner circumferential side of each side wall portion 12. The tread portion 11, the side wall portions 12 and the bead portions 13 are reinforced by a carcass 14 composed of a single carcass ply toroidally extending from one bead portion 13 to the other bead portion 13. In the illustrated tire 10 for trucks and buses, bead cores 15 are each embedded in the pair of the bead portions 13, and the carcass 14 is folded around the bead cores 15 from the inside to the outside of the tire and thereby anchored. In addition, bead fillers 16 are arranged on the outer side in a tire radial direction of the respective bead cores 15.

Further, the tire of the present invention sequentially includes, on the outer side in the tire radial direction of a crown portion of the carcass 14: a spiral cord layer 1 having a structure in which an upper layer 1A and a lower layer 1B are formed by spirally winding reinforcing cords; and an auxiliary belt layer 17.

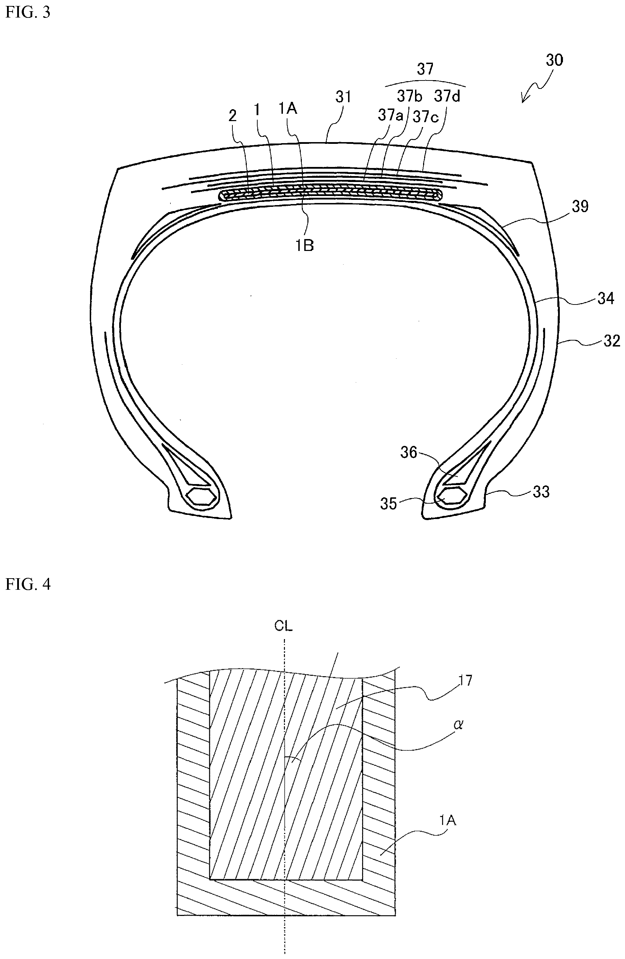

The present invention is characterized in that an inclination direction of belt cords of the auxiliary belt layer 17 and an inclination direction of the reinforcing cords of the upper layer 1A of the spiral cord layer 1 are the same when an angle α of the belt cords of the auxiliary belt layer 17 with respect to the tire circumferential direction is 54.7° < α < 90°, and these inclination directions are different when the angle α of the belt cords of the auxiliary belt layer 17 with respect to the tire circumferential direction is 0° < α < 54.7°. FIG. 4 is a drawing illustrating a relationship between an inclination direction of belt cords of an auxiliary belt layer and an inclination direction of reinforcing cords of an upper layer of a spiral cord layer when an angle α of the belt cords of the auxiliary belt layer with respect to the tire circumferential direction is 0° < α < 54.7°. Further, FIG. 5 is a drawing illustrating a relationship between an inclination direction of belt cords of an auxiliary belt layer and an inclination direction of reinforcing cords of an upper layer of a spiral cord layer when an angle α of the belt cords of the auxiliary belt layer with respect to the tire circumferential direction is 54.7° < α < 90°. The reason for the above prescription is because the behavior of the auxiliary belt layer 17 with a tensile stress being applied thereto in the tire circumferential direction changes at a point where the angle α of the belt cords of the auxiliary belt layer 17 with respect to the tire circumferential direction is 54.7°.

In other words, when the angle α of the belt cords of the auxiliary belt layer 17 with respect to the tire circumferential direction is smaller than 54.7°, the belt cords of the auxiliary belt layer 17 are displaced in a direction toward the tire width direction against a tension, whereas when the angle α of the belt cords of the auxiliary belt layer 17 with respect to the tire circumferential direction is larger than 54.7°, the belt cords of the auxiliary belt layer 17 are displaced in a direction toward the tire circumferential direction against a tension. Meanwhile, in the spiral cord layer 1, since the reinforcing cords of the upper layer 1A and the lower layer 1B are continuous with one another, the reinforcing cords are always displaced in a direction toward the tire circumferential direction against a tension. Accordingly, when the angle α of the belt cords of the auxiliary belt layer 17 with respect to the tire circumferential direction is smaller than 54.7°, the inclination direction of the belt cords of the auxiliary belt layer 17 and the inclination direction of the reinforcing cords of the upper layer 1A of the spiral cord layer 1 are controlled to be different from each other, while when the angle α of the belt cords of the auxiliary belt layer 17 with respect to the tire circumferential direction is larger than 54.7°, the inclination direction of the belt cords of the auxiliary belt layer 17 and the inclination direction of the reinforcing cords of the upper layer 1A of the spiral cord layer 1 are controlled to be the same, whereby the belt cords of the auxiliary belt layer 17 and the reinforcing cords of the spiral cord layer 1 are always displaced in the same direction when a tension is applied thereto. This enables to minimize the change in the angle between the cords of the upper layer 1A of the spiral cord layer 1 and the cords of the auxiliary belt layer 17 during repeated input in traveling; therefore, the amount of rubber strain between these layers can be reduced and, as a result, the occurrence of separation between the layers can be effectively suppressed. Moreover, when the angle α of the belt cords of the auxiliary belt layer 17 with respect to the tire circumferential direction is 0°, 54.7° or 90°, since there is no such change in the angle against elongation in the tire circumferential direction, the inclination direction of the belt cords of the auxiliary belt layer 17 and the inclination direction of the reinforcing cords of the upper layer 1A of the spiral cord layer 1 may be the same or different.

In the present invention, the upper layer 1A of the spiral cord layer 1 and the auxiliary belt layer 17 may have any cord inclination direction as long as the above-described conditions are satisfied, and this enables to attain the expected effects of the present invention. Other constitutions are not particularly restricted, and the tire of the present invention can be configured as appropriate in accordance with a conventional method.

In the illustrated example, the spiral cord layer 1 includes a core-material cord layer 2 between the upper layer 1A and the lower layer 1B, i.e., the spiral cord layer 1 is formed by spirally winding reinforcing cords on the core-material cord layer 2; however, the present invention is not restricted to this configuration, and the core-material cord layer 2 does not have to be arranged. Further, when the core-material cord layer 2 is arranged, it may be arranged singly, or a plurality thereof (e.g., 2 to 10) may be laminated. The core-material cord layer 2 is produced by parallelly aligning a large number of core-material cords and subsequently arranging an unvulcanized rubber on top and bottom thereof to coat the core-material cords with the rubber. The end count of the core-material cords in the core-material cord layer 2 is preferably in a range of, for example, 5 to 60 cords/50 mm.

In the present invention, the core-material cords of the core-material cord layer 2 may have an inclination angle of 40° to 90° with respect to the tire circumferential direction. By controlling the angle of the core-material cords to be in this range, the tension of the core-material cords is reduced, so that the core-material cords are given an increased leeway before being fractured. This consequently makes the core-material cords less likely to be fractured even when an input is applied thereto from an obstacle. In order to favorably attain this effect, the inclination angle of the core-material cords of the core-material cord layer 2 is more preferably 50° to 90° with respect to the tire circumferential direction. When a plurality of core-material cord layers 2 are arranged, the plurality of core-material cord layers 2 may constitute intersecting belt layers.

In the present invention, the spiral cord layer 1 is formed by spirally winding a rubber-cord composite obtained by parallelly arranging a single or a plurality of (e.g., 2 to 100) reinforcing cords and coating the resultant with a rubber, in the form of a flat strip, or by spirally winding the rubber-cord composite around the core-material cord layer 2. An end count of the reinforcing cords in the spiral cord layer 1 is preferably in a range of, for example, 5 to 60 cords/50 mm.

Further, in the present invention, an angle of the reinforcing cords of the spiral cord layer 1 is preferably in a range of 12° to 90° with respect to the tire circumferential direction. In the spiral cord layer 1, the upper layer 1A and the lower layer 1B are not separated at their ends in the tire width direction; therefore, the spiral cord layer 1 has characteristics of exhibiting a tension and thus being less likely to grow in diameter when an internal pressure is applied to the tire, and this tends to make the crown portion round as a result. By controlling the angle of the reinforcing cords of the spiral cord layer 1 to be 12° or larger, the growth in diameter at the time of applying an internal pressure can be maintained within an acceptable range, and wearing of shoulder portions can be suppressed. It is noted here that, in the present invention, the angle of the reinforcing cords of the spiral cord layer 1 may be a value measured on the tire equatorial plane. This angle is preferably in a range of 12° to 45° with respect to the tire circumferential direction.

In the present invention, the auxiliary belt layer 17 is formed by parallelly arranging a large number of belt cords and coating the belt cords with a rubber. In the present invention, the angle α of the belt cords of the auxiliary belt layer 17 with respect to the tire circumferential direction is not particularly restricted.

In the present invention, the material of the reinforcing cords of the spiral cord layer 1 and that of the core-material cords of the core-material cord layer 2 are not particularly restricted, and various metal cords, organic fiber cords and the like that are conventionally and commonly used can be employed as appropriate. Specific examples of the metal cords that can be used include steel filaments and steel cords obtained by twisting a plurality of steel filaments together. In this case, various designs can be adopted for the twist structure of the cords, and various cross-sectional structures, twist pitches, twist directions and distances between adjacent filaments can be employed. As the cross-sectional structures, various twist structures such as single twist, layer twist and multi-twist can be adopted, and cords having a flat cross-sectional shape can be used as well. The steel filaments constituting the steel cords contain iron as a main component and may further contain various trace elements, such as carbon, manganese, silicon, phosphorus, sulfur, copper, and chromium. Moreover, on the surface of the steel filaments, brass plating may be performed for improvement of the adhesion with a rubber.

As organic fibers, for example, aramid fibers (aromatic polyamide fibers), polyketone (PK) fibers, poly-p-phenylene benzobisoxazole (PBO) fibers, and polyarylate fibers can be used. In addition, for example, carbon fibers, such as polyacrylonitrile (PAN)-based carbon fibers, pitch-based carbon fibers and rayon-based carbon fibers, as well as glass fibers and rock fibers (rock wool) such as basalt fibers and andesite fibers can also be used. It is noted here that these reinforcing cords be treated with an adhesive so as to improve their adhesion with a rubber. This adhesive treatment can be performed in accordance with a conventional method using a commonly-used adhesive such as an RFL-based adhesive. Further, hybrid cords composed two or more kinds of the above-described fibers may be used as well.

In the present invention, a rubber composition used as a coating rubber of the spiral cord layer 1 and the core-material cord layer 2 is not particularly restricted and any known rubber composition can be used. For example, as a rubber component contained in the rubber composition used as the coating rubber, any known rubber component can be used, and examples thereof include natural rubbers and synthetic rubbers, such as vinyl aromatic hydrocarbon-conjugated diene copolymers, polyisoprene rubbers, butadiene rubbers, butyl rubbers, halogenated butyl rubbers, and ethylene-propylene rubbers. These rubber components may be used individually, or two or more thereof may be used in combination. From the standpoints of the characteristics of adhesion with metal cords and the fracture characteristics of the rubber composition, the rubber component is preferably one composed of at least either a natural rubber or a polyisoprene rubber, or one which contains a natural rubber in an amount of not less than 50% by mass and in which the remainder is composed of a synthetic rubber.

In the rubber composition used as the coating rubber in the present invention, an additive(s) normally used in the rubber industry, examples of which include fillers (e.g., carbon black and silica), softening agents (e.g., aromatic oil), methylene donors (e.g., methoxymethylated melamines, such as hexamethylenetetramine, pentamethoxymethylmelamine, and hexamethylene methylmelamine), vulcanization accelerators, vulcanization aids and age resistors, can be incorporated as appropriate in an ordinary amount. Further, a method of preparing the rubber composition used as the coating rubber in the present invention is not particularly restricted and, the rubber composition can be prepared by, for example, kneading sulfur, an organic acid cobalt salt and various additives into a rubber component using a Banbury mixer, a roll or the like in accordance with a conventional method.

In the illustrated tire 10 for trucks and buses, the auxiliary belt layer 17 can be an inclined belt in which belt cords have a prescribed angle with respect to the tire circumferential direction. As reinforcing cords of the inclined belt layer, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. Further, the width of the auxiliary belt layer 17 is preferably 40% to 115%, particularly preferably 50% to 70%, of the tread width. On the inner side in the tire radial direction of each end of the spiral cord layer 1, it is preferred to arrange a belt under-cushion rubber 18. By this, strain and temperature applied to the ends of the spiral cord layer 1 are reduced, so that the tire durability can be improved.

In the tire 10 for trucks and buses according to the present invention, a variety of constitutions including conventional structures can be adopted for the carcass 14, and the carcass 14 may have a radial structure or a bias structure. The carcass 14 is preferably constituted by one or two carcass plys each composed of a steel cord layer. Further, the carcass 14 may have its maximum-width positions in the tire radial direction, for example, on the side closer to the respective bead portions 13 or on the side closer to the tread portion 11. For example, the maximum-width positions of the carcass 14 can be arranged in a range of 50% to 90% from each bead base on the outer side in the tire radial direction with respect to the tire height. Moreover, as illustrated, the carcass 14 is generally and preferably configured to extend between the pair of the bead cores 15 without interruption; however, the carcass 14 can also be constituted by a pair of carcass pieces that extend from the respective bead cores 15 and are interrupted in the vicinity of the tread portion 11.

A variety of structures can be adopted for the folded parts of the carcass 14. For example, the folded ends of the carcass 14 can be positioned on the inner side in the tire radial direction than the upper ends of bead fillers 16, and the folded ends of the carcass may extend further on the outer side in the tire radial direction than the upper ends of the bead fillers 16 or the tire maximum-width positions. In this case, the folded ends of the carcass may extend to the inner side in the tire width direction than the ends in the tire width direction of the spiral cord layer 1. Further, in cases where a plurality of carcass plys are arranged, the positions of the folded ends of the carcass 14 in the tire radial direction may be different from each other. Alternatively, the carcass 14 may take a structure in which the carcass 14 is sandwiched by a plurality of bead core members or wound around the bead cores 15, in the absence of folded parts. An end count of the carcass 14 is generally in a range of 5 to 60 cords/50 mm; however, the end count is not restricted thereto.

Further, in the tire 10 for trucks and buses according to the present invention, on the outer side in the tire radial direction of the spiral cord layer 1 and the auxiliary belt layer 17, a circumferential cord layer (not illustrated) may be arranged as well.

In the tire 10 for trucks and buses according to the present invention, a known structure can be adopted also for the side wall portions 12. For example, the tire maximum-width positions can be arranged in a range of 50% to 90% from each bead base on the outer side in the tire radial direction with respect to the tire height. In the tire 10 for trucks and buses according to the present invention, it is preferred that the side wall portions 12 be each formed as a smooth curve having a convex shape in the tire width direction without a recess that comes into contact with the rim flange, which is different from the tire for passenger vehicles.

Moreover, a variety of structures, such as a circular shape and a polygonal shape, can be adopted for the bead cores 15. It is noted here that, as described above, the bead portions 13 may have a structure in which the carcass 14 is wound on the bead cores 15, or a structure in which the carcass 14 is sandwiched by a plurality of bead core members. In the illustrated tire 10 for trucks and buses, bead fillers 16 are arranged on the outer side in the tire radial direction of the respective bead cores 15, and the bead fillers 16 may each be constituted by a plurality of rubber members that are separated from each other in the tire radial direction.

In the tire 10 for trucks and buses according to the present invention, the tread pattern may be a rib-like land portion dominant pattern, a block pattern or an asymmetrical pattern, and the tread pattern may have a designated rotation direction.

The rib-like land portion dominant pattern is a pattern which is mainly constituted by rib-like land portions that are partitioned in the tire width direction by at least one circumferential groove or by a circumferential groove(s) and tread ends. The term "rib-like land portion" used herein refers to a land portion that extends in the tire circumferential direction without any lateral groove across the tire width direction; however, the rib-like land portion may have a sipe and a lateral groove terminating within each rib-like land portion. Since a radial tire has a high ground-contact pressure particularly when used at a high internal pressure, it is believed that the ground-contact performance on wet road surfaces is improved by increasing the circumferential shear rigidity. The pattern mainly constituted by rib-like land portions can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings. Further, in the tread portion, it is preferred that a corner 11a be formed at each tire width-direction end.

The tire illustrated in FIG. 1 is a tire for trucks and busses; however, the present invention is not restricted thereto and can also be suitably applied to, for example, tires for passenger vehicles, construction vehicles, two-wheeled vehicles, airplanes and agriculture. Further, the tire is not restricted to be a pneumatic tire and can also be applied as a solid tire or a non-pneumatic tire.

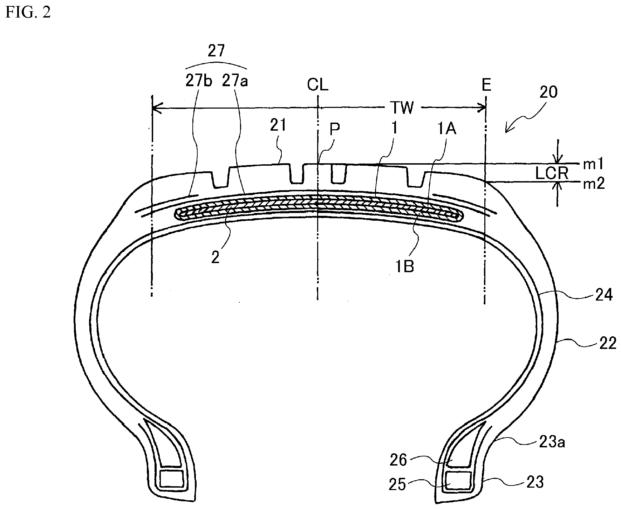

FIG. 2 is a cross-sectional view in the tire width direction illustrating one configuration example of a tire for passenger vehicles according to the present invention. The illustrated tire 20 for passenger vehicles includes: a tread portion 21 which forms a ground-contact part; a pair of side wall portions 22 which continuously extend inward in the tire radial direction on both sides of the tread portion 21; and bead portions 23 which continuously extend on the inner circumferential side of each side wall portion 22. The tread portion 21, the side wall portions 22 and the bead portions 23 are reinforced by a carcass 24, which is composed of a single carcass ply toroidally extending from one bead portion 23 to the other bead portion 23. In the illustrated tire 20 for passenger vehicles, bead cores 25 are each embedded in the pair of the bead portions 23, and the carcass 24 is folded around the bead cores 25 from the inside to the outside of the tire and thereby anchored. In addition, bead fillers 26 are arranged on the outer side in the tire radial direction of the respective bead cores 25.

In the illustrated tire 20 for passenger vehicles, on the outer side in the tire radial direction of the carcass 24 in the crown portion, a spiral cord layer 1 having a structure in which an upper layer 1A and a lower layer 1B are formed by spirally winding reinforcing cords, and an auxiliary belt layer 27 are sequentially arranged.

In the present invention, it is important that the cord inclination direction of the upper layer 1A of the spiral cord layer 1 and that of the auxiliary belt layer 27 satisfy the above-described conditions, and this enables to attain the expected effects of the present invention. In the case of the tire for passenger vehicles illustrated in FIG. 2, examples of the auxiliary belt layer 27 include a cap layer 27a arranged over the entire width or more of the spiral cord layer 1, and a layered layer 27b arranged in the regions that cover the respective ends of the spiral cord layer 1. Usually, the cap layer 27a and the layered layer 27b may each be formed by spirally winding a constant-width strip, which is obtained by paralleling a large number of cords and coating the cords with a rubber, in the tire circumferential direction. The cap layer 27a and the layered layer 27b may each be arranged alone, or both of them may be arranged in combination. Alternatively, the auxiliary belt layer may be a combination of two or more cap layers and/or two or more layered layers. In the present invention, in any of these case, the conditions relating to the cord inclination directions of the upper layer 1A of the spiral cord layer 1 and the auxiliary belt layer 27 arranged adjacent thereto on the outer side in the tire radial direction present a problem.

Various materials can be used as the reinforcing cords of the cap layer 27a and the layered layer 27b, and representative examples thereof include rayon, nylon, polyethylene naphthalate (PEN), polyethylene terephthalate (PET), aramid, glass fibers, carbon fibers, and steel. From the standpoint of weight reduction, the reinforcing cords are particularly preferably organic fiber cords. As the reinforcing cords, monofilament cords, cords obtained by twisting a plurality of filaments together, or hybrid cords obtained by twisting filaments of different materials together can be used as well. Further, in order to increase the breaking strength, wavy cords may also be used as the reinforcing cords. Similarly, for example, high-elongation cords having an elongation at break of 4.5% to 5.5% may be used to increase the breaking strength.

An end count of the cap layer 27a and that of the layered layer 27b are generally in a range of 20 to 60 cords/50 mm; however, the end counts are not restricted thereto. For example, the cap layer 27a may be imparted with distribution in the tire width direction in terms of rigidity, material, number of layers, cord density and the like and, for example, the number of layers can be increased only at the ends in the tire width direction, or only in the central part.

From the production standpoint, it is particularly advantageous to configure the cap layer 27a and the layered layer 27b as spiral layers. In this case, these layers may be constituted by strip-from cords in which a plurality of core wires arranged in parallel to each other in a plane are bundled together by a wrapping wire with the parallel arrangement being maintained.

In the tire 20 for passenger vehicles according to the present invention, a variety of configurations including conventional structures can be adopted for the carcass 24, and the carcass 24 may have a radial structure or a bias structure. The carcass 24 is preferably constituted by one or two carcass plys each composed of an organic fiber cord layer. Further, the carcass 24 may have its maximum-width positions in the tire radial direction, for example, on the side closer to the respective bead portions 23 or on the side closer to the tread portion 21. For example, the maximum-width positions of the carcass 24 can be arranged in a range of 50% to 90% from each bead base on the outer side in the tire radial direction with respect to the tire height. Moreover, as illustrated, the carcass 24 is generally and preferably configured to extend between the pair of the bead cores 25 without interruption; however, the carcass 24 can also be constituted by a pair of carcass ply pieces that extend from the respective bead cores 25 and are interrupted in the vicinity of the tread portion 21 (not illustrated).

A variety of structures can be adopted for the folded parts of the carcass 24. For example, the folded ends of the carcass 24 can be positioned on the inner side in the tire radial direction than the upper ends of bead fillers 26, and the folded ends of the carcass 24 may extend further on the outer side in the tire radial direction than the upper ends of the bead fillers 26 or the tire maximum-width positions. In this case, the folded ends of the carcass 24 may extend to the inner side in the tire width direction than the ends in the tire width direction of the spiral cord layer 1. Further, in cases where a plurality of carcass plys are arranged, the positions of the folded ends of the carcass 24 in the tire radial direction may be different from each other. Alternatively, the carcass 24 may take a structure in which the carcass 24 is sandwiched by a plurality of bead core members or wound around the bead cores 25, in the absence of folded parts. An end count of the carcass 24 is generally in a range of 5 to 60 cords/50 mm; however, the end count is not restricted thereto.

With regard to the shape of the tread portion 21 in the tire 20 for passenger vehicles according to the present invention that has a narrow width and a large diameter, when, at a tire widthwise cross-section, a straight line that runs through a point P on the tread in the tire equatorial plane CL and is parallel to the tire width direction is defined as m1, a straight line that runs through a ground-contact end E and is parallel to the tire width direction is defined as m2, the distance between the straight lines m1 and m2 in the tire radial direction is defined as fall height "LCR" and the tread width of the tire is defined as "TW", the ratio LCR/TW is preferably 0.045 or lower. By controlling the ratio LCR/TW in this range, the crown portion of the tire is flattened (planarized), so that the ground-contact area is increased and the input (pressure) from the road surface is thus alleviated, whereby the deflection rate in the tire radial direction can be reduced and the durability and the wear resistance of the tire can be improved. Further, the tread ends are preferably smooth.

The tread pattern may be a full-lug pattern, a rib-like land portion dominant pattern, a block pattern or an asymmetrical pattern, and the tread pattern may have a designated rotation direction.

The full-lug pattern may be a pattern that includes widthwise grooves extending in the tire width direction from the vicinity of the equatorial plane to the ground-contact ends and, in this case, the pattern is not required to have a circumferential groove. Such a pattern mainly constituted by lateral grooves is capable of effectively exerting on-snow performance in particular.

The rib-like land portion dominant pattern is a pattern which is mainly constituted by rib-like land portions that are partitioned in the tire width direction by at least one circumferential groove or by a circumferential groove(s) and tread ends. The term "rib-like land portion" used herein refers to a land portion that extends in the tire circumferential direction without any lateral groove across the tire width direction; however, the rib-like land portion may have a sipe and a lateral groove terminating within each rib-like land portion. Since a radial tire has a high ground-contact pressure particularly when used at a high internal pressure, it is believed that the ground-contact performance on wet road surfaces is improved by increasing the circumferential shear rigidity. The rib-like land portion dominant pattern can be, for example, a tread pattern in which a region that is centered on the equatorial plane and corresponds to 80% of the tread width consists of only rib-like land portions, namely a pattern having no lateral groove. In such a pattern, the drainage performance in this region largely contributes to wet performance in particular.

The block pattern is a pattern including block land portions that are partitioned by circumferential grooves and widthwise grooves, and a tire having such a block pattern exhibits excellent basic on-ice performance and on-snow performance.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber or a foamed rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In the tire 20 for passenger vehicles according to the present invention, a known structure can be adopted also for the side wall portions 22. For example, the tire maximum-width positions can be arranged in a range of 50% to 90% from each bead base on the outer side in the tire radial direction with respect to the tire height. Further, a structure including a rim guard may be adopted as well. In the tire 20 for passenger vehicles according to the present invention, it is preferred that a recess 23a, which comes into contact with the rim flange, be formed.

Moreover, a variety of structures, such as a circular shape and a polygonal shape, can be adopted for the bead cores 25. It is noted here that, as described above, the bead portions 23 may have a structure in which the carcass 24 is wound on the bead cores 25, or a structure in which the carcass 24 is sandwiched by a plurality of bead core members. In the illustrated tire 20 for passenger vehicles, bead fillers 26 are arranged on the outer side in the tire radial direction of the respective bead cores 25; however, the bead fillers 26 may be omitted in the tire 20 for passenger vehicles according to the present invention.

In the tire for passenger vehicles according to the present invention, usually, an inner liner may be arranged in the innermost layer of the tire, although it is not illustrated in the drawing. The inner liner may be constituted by a rubber layer mainly composed of butyl rubber, or a film layer including a resin as a main component. Further, although not illustrated in the drawing, a porous member may be arranged and an electrostatic flocking process may be performed on the tire inner surface for the purpose of reducing cavity resonance noise. Moreover, on the tire inner surface, a sealant member for inhibition of air leakage upon puncture of the tire may be arranged as well.

The use of the tire 20 for passenger vehicles is not particularly restricted. The tire 20 can be suitably used as a summer tire, an all-season tire, or a winter tire. It is also possible to use the tire 20 as a tire for passenger vehicles that has a special structure, such as a side-reinforced run-flat tire having a crescent-shaped reinforcing rubber layer in the side wall portions 22, or a studded tire.

FIG. 3 is a cross-sectional view in the tire width direction illustrating one configuration example of the tire for construction vehicles according to the present invention. The illustrated tire 30 for construction vehicles includes: a tread portion 31 which forms a ground-contact part; a pair of side wall portions 32 which continuously extend inward in the tire radial direction on both sides of the tread portion 31; and bead portions 33 which continuously extend on the inner circumferential side of each side wall portion 32. The tread portion 31, the side wall portions 32 and the bead portions 33 are reinforced by a carcass 34, which is composed of a single carcass ply toroidally extending from one bead portion 33 to the other bead portion 33. In the illustrated tire 30 for construction vehicles, bead cores 35 are each embedded in the pair of the bead portions 33, and the carcass 34 is folded around the bead cores 35 from the inside to the outside of the tire and thereby anchored. In addition, bead fillers 36 are arranged on the outer side in the tire radial direction of the respective bead cores 35.

In the illustrated tire 30 for construction vehicles, on the outer side in the tire radial direction of a crown portion of the carcass 34, a spiral cord layer 1 having a structure in which an upper layer 1A and a lower layer 1B are formed by spirally winding reinforcing cords, and four belt layers 37a to 37d are sequentially arranged. In the tire 30 for construction vehicles, these four belt layers 37 correspond to the auxiliary belt layer according to the present invention. Generally, a tire for construction vehicles includes 4 to 6 belt layers and, when the tire for construction vehicles includes 6 belt layers, a first and a second belt layers constitute an inner intersecting belt layer group; a third and a fourth belt layers constitute a middle intersecting belt layer group; and a fifth and a sixth belt layers constitute an outer intersecting belt layer group. In the tire for construction vehicles according to the present invention, the inner intersecting belt layer group is replaced with the spiral cord layer 1, and the auxiliary belt layers 37a to 37d are arranged as the middle and the outer intersecting belt layer groups. Meanwhile, in the case of a tire for construction vehicles that includes four belt layers, the first and the second belt layers may be replaced with the spiral cord layer 1, and the third and the fourth belt layers may be the auxiliary belt layers 37a and 37b.

When the tire for construction vehicles includes 6 belt layers, in the tread width direction, the width of the spiral cord layer 1 can be 25% to 70% of the width of the tread; the width of the auxiliary belt layers 37a and 37b can be 55% to 90% of the width of the tread; and the width of the auxiliary belt layers 37c and 37d can be 60% to 110% of the width of the tread. Further, in the tread planar view, the inclination angle of the belt cords of the auxiliary belt layers 37a and 37b can be 50° to 75° with respect to the carcass cords, and the inclination angle of the belt cords of the auxiliary belt layers 37c and 37d can be 70° to 85° with respect to the carcass cords.

In the present invention, it is important that the cord inclination direction of the upper layer 1A of the spiral cord layer 1 and that of the auxiliary belt layer 37 satisfy the above-described conditions, and this enables to attain the expected effects of the present invention. In the present invention, the conditions relating to the cord inclination directions of the upper layer 1A of the spiral cord layer 1 and the auxiliary belt layer 37 arranged adjacent thereto on the outer side in the tire radial direction matter, regardless of the number of the auxiliary belt layers 37.

In the tire 30 for construction vehicles according to the present invention, the auxiliary belt layers 37 can be inclined belts which are each composed of a rubberized layer of reinforcing cords and have a prescribed angle with respect to the tire circumferential direction. As the reinforcing cords of the inclined belt layers, it is most common to use, for example, metal cords, particularly steel cords; however, organic fiber cords may be used as well. As the steel cords, cords that are composed of steel filaments containing iron as a main component along with various trace elements, such as carbon, manganese, silicon, phosphorus, sulfur, copper and chromium, can be used.

As the steel cords, in addition to those cords obtained by twisting a plurality of filaments together, steel monofilament cords may be used as well. Various designs can be adopted for the twist structure of the steel cords, and various cross-sectional structures, twist pitches, twist directions and distances between adjacent steel cords can be applied to the steel cords. Further, cords obtained by twisting filaments of different materials together can also be used. The cross-sectional structure thereof is not particularly restricted, and various twist structures such as single twist, layer twist and multi-twist can be adopted. The inclination angle of the reinforcing cords of the other belt layers is preferably 10° or larger with respect to the tire circumferential direction. Moreover, among the auxiliary belt layers 37, the width of a maximum-width inclined belt layer having the largest width is preferably 90% to 115%, particularly preferably 100% to 105%, of the tread width. On the inner side in the tire radial direction of the respective ends of the auxiliary belt layers 37, it is preferred to arrange a belt under-cushion rubber 39. By this, strain and temperature applied to the ends of the auxiliary belt layers 37 are reduced, so that the tire durability can be improved.

In the tire for construction vehicles according to the present invention, a variety of constitutions including conventional structures can be adopted for the carcass 34, and the carcass 34 may have a radial structure or a bias structure. The carcass 34 is preferably constituted by one or two carcass plys each composed of a steel cord layer. Further, the carcass 34 may have its maximum-width positions in the tire radial direction, for example, on the side closer to the respective bead portions 33 or on the side closer to the tread portion 31. For example, the maximum-width positions of the carcass 34 can be arranged in a range of 50% to 90% from each bead base on the outer side in the tire radial direction with respect to the tire height. Moreover, as illustrated, the carcass 34 is generally and preferably configured to extend between the pair of the bead cores 35 without interruption; however, the carcass 34 can also be constituted by a pair of carcass pieces that extend from the respective bead cores 35 and are interrupted in the vicinity of the tread portion 31.

A variety of structures can be adopted for the folded parts of the carcass 34. For example, the folded ends of the carcass 34 can be positioned on the t inner side in the ire radial direction than the upper ends of bead fillers 36, and the folded ends of the carcass 34 may extend further on the outer side in the tire radial direction than the upper ends of the bead fillers 36 or the tire maximum-width positions. In this case, the folded ends of the carcass 34 may extend to the inner side in the tire width direction than the ends in the tire width direction of the spiral cord layer 1. Further, in cases where a plurality of carcass plys are arranged, the positions of the folded ends of the carcass 34 in the tire radial direction may be different from each other. Alternatively, the carcass 34 may take a structure in which the carcass 34 is sandwiched by a plurality of bead core members or wound around the bead cores 35, in the absence of folded parts. An end count of the carcass 34 is generally in a range of 5 to 60 cords/50 mm; however, the end count is not restricted thereto.

In the tire 30 for construction vehicles according to the present invention, a known structure can be adopted also for the side wall portions 32. For example, the tire maximum-width positions can be arranged in a range of 50% to 90% from each bead base on the outer side in the tire radial direction with respect to the tire height. In the tire 30 for construction vehicles according to the present invention, it is preferred that a recess that comes into contact with the rim flange be formed.

Moreover, a variety of structures, such as a circular shape and a polygonal shape, can be adopted for the bead cores 35. It is noted here that, as described above, the bead portions 33 may have a structure in which the carcass 34 is wound on the bead cores 35, or a structure in which the carcass 34 is sandwiched by a plurality of bead core members. In the illustrated tire 30 for construction vehicles, bead fillers 36 are arranged on the outer side in the tire radial direction of the respective bead cores 35, and the bead fillers 36 may each be constituted by a plurality of rubber members that are separated from each other in the tire radial direction.

In the tire 30 for construction vehicles according to the present invention, the tread pattern may be a lug pattern, a block pattern or an asymmetrical pattern, and the tread pattern may have a designated rotation direction.

The lug pattern may be a pattern that includes widthwise grooves extending in the tire width direction from the vicinity of the equatorial plane to the ground-contact ends and, in this case, the pattern is not required to have a circumferential groove.

The block pattern is a pattern including block land portions that are partitioned by circumferential grooves and widthwise grooves. Particularly, in the case of a tire for construction vehicles, the blocks are preferably large from the durability standpoint and, for example, the width of each block measured in the tire width direction is preferably 25% to 50% of the tread width.

The asymmetrical pattern is a pattern in which tread patterns on each side of the equatorial plane are asymmetrical. For example, in the case of a tire having a designated mounting direction, the negative ratio may be different between the tire halves on the inner side and the outer side in the vehicle mounting direction that are divided by the equatorial plane, or the tire may be configured to have different numbers of circumferential grooves between the tire halves on the inner side and the outer side in the vehicle mounting direction that are divided by the equatorial plane.

The tread rubber is not particularly restricted, and any conventionally used rubber can be used. The tread rubber may be constituted by a plurality of rubber layers that are different from each other along the tire radial direction, and the tread rubber may have, for example, a so-called cap-base structure. As the plurality of rubber layers, those that are different from each other in terms of loss tangent, modulus, hardness, glass transition temperature, material and the like can be used. The thickness ratio of the plurality of rubber layers in the tire radial direction may vary along the tire width direction and, for example, only the bottom of the circumferential grooves may be constituted by a rubber layer(s) different from the surroundings.

Alternatively, the tread rubber may be constituted by a plurality of rubber layers that are different from each other in the tire width direction, and the tread rubber may have a so-called divided tread structure. As the plurality of rubber layers, those that are different from each other in terms of loss tangent, modulus, hardness, glass transition temperature, material and the like can be used. The length ratio of the plurality of rubber layers in the tire width direction may vary along the tire radial direction, and only a limited region, such as only the vicinity of the circumferential grooves, only the vicinity of the tread ends, only the vicinity of the shoulder land portions or only the vicinity of the center land portion, may be constituted by a rubber layer(s) different from the surroundings.

In construction vehicles, the thicker the rubber gauge of the tread portion 31, the more preferred it is from the durability standpoint, and the rubber gauge of the tread portion 31 is preferably 1.5% to 4%, more preferably 2% to 3%, of the tire outer diameter. Further, the ratio of the groove area with respect to the ground-contact surface of the tread portion 31 (negative ratio) is preferably not higher than 20%. The reason for this is because the tire 30 for construction vehicles is primarily used at low speed in dry areas and, therefore, it is not necessary to have a high negative ratio for drainage performance. As for the size of the tire for construction vehicles, for example, the rim diameter is not less than 20 inches, particularly not less than 40 inches for a large-size tire.

### EXAMPLES

The present invention will now be described in more detail by way of examples thereof.

Reinforcing cords were spirally wound on a single core-material cord layer to prepare a reinforcing member that had a structure including a core-material cord layer between an upper layer and a lower layer of a spiral cord layer. The thus obtained reinforcing member was arranged on the outer side in the tire radial direction of a crown portion of a carcass, and an auxiliary belt layer was further arranged on the outer side in the tire radial direction of this reinforcing member, whereby tires for trucks and buses as illustrated in FIG. 1 were produced at a tire size of 275/80R22.5.

As core-material cords of the core-material cord layer and belt cords of the auxiliary belt layer, steel cords having a 1+6 structure composed of steel filaments of 1.13 mm in diameter were used. The inclination angle of the steel cords of the core-material cord layer was set at 70° with respect to the longitudinal direction of the reinforcing member. The reinforcing cords of the spiral cord layer had an inclination angle of 16° with respect to the longitudinal direction of the reinforcing member. Further, the inclination angle and direction of the steel cords of the auxiliary belt layer were as shown in Tables below.

### <Evaluation of Travel Distance>

The thus obtained test tires were each mounted on a rim, inflated to a prescribed internal pressure, and then subjected to a running test on a drum at a speed of 65 km/h at a room temperature of 38°C with 150% of normal load being applied thereto. The distance traveled until a defect occurred due to separation between the spiral cord layer and the auxiliary belt layer was measured.

### <Cases Where PAN-based Carbon Fiber Cords Were Applied as Reinforcing Cords of Spiral Cord Layer>

The results of cases where PAN-based carbon fiber cords (cord structure: 12,000 dtex/1) were used as the reinforcing cords of the spiral cord layer are shown in Tables 1 and 2 below. The end count of the spiral cord layer was set at 27.65 cords/50 mm. Tables 1 and 2 show the results that were obtained when the angle α of the belt cords of the auxiliary belt layer with respect to the tire circumferential direction was 54.7° < α < 90° and 0° < α < 54.7°, respectively.

### <Cases where 54.7° < α < 90°>

With regard to each angle α of the belt cords of the auxiliary belt layer with respect to the tire circumferential direction, Table 1 below shows the ratios of the travel distance in the respective Examples where the inclination direction of the belt cords of the auxiliary belt layer and the inclination direction of the reinforcing cords of the upper layer of the spiral cord layer were the same, taking the travel distance of the respective Comparative Examples, where the inclination direction of the belt cords of the auxiliary belt layer and the inclination direction of the reinforcing cords of the upper layer of the spiral cord layer were different, as 100. A higher ratio of travel distance indicates a further improvement in the durability of the belt portions.

**[Table 1]**

| | Belt cords of auxiliary belt layer | Whether the inclination direction was the same or different between the belt cords of the auxiliary belt layer and the reinforcing cords of the spiral cord layer | Travel distance (ratio) |
|---|---|---|---|
| | Cord angle α(°) with respect to circumferential direction | | |
| Example 1 | 60 | same | 105 |
| Comparative Example 1 | 60 | different | 100 |
| Example 2 | 65 | same | 125 |
| Comparative Example 2 | 65 | different | 100 |
| Example 3 | 70 | same | 120 |
| Comparative Example 3 | 70 | different | 100 |
| Example 4 | 75 | same | 110 |
| Comparative Example 4 | 75 | different | 100 |

### <Cases where 0° < α < 54.7°>

With regard to each angle α of the belt cords of the auxiliary belt layer with respect to the tire circumferential direction, Table 2 below shows the ratios of the travel distance in the respective Examples where the inclination direction of the belt cords of the auxiliary belt layer and the inclination direction of the reinforcing cords of the upper layer of the spiral cord layer were different, taking the travel distance of the respective Comparative Examples, where the inclination direction of the belt cords of the auxiliary belt layer and the inclination direction of the reinforcing cords of the upper layer of the spiral cord layer were the same, as 100. A higher ratio of travel distance indicates a further improvement in the durability of the belt portions.

**[Table 2]**

| | Belt cords of auxiliary belt layer | Whether the inclination direction was the same or different between the belt cords of the auxiliary belt layer and the reinforcing cords of the spiral cord layer | Travel distance (ratio) |
|---|---|---|---|
| | Cord angle α(°) with respect to circumferential direction | | |
| Example 5 | 5 | different | 102 |
| Comparative Example 5 | 5 | same | 100 |
| Example 6 | 15 | different | 105 |
| Comparative Example 6 | 15 | same | 100 |
| Example 7 | 30 | different | 110 |
| Comparative Example 7 | 30 | same | 100 |
| Example 8 | 45 | different | 108 |
| Comparative Example 8 | 45 | same | 100 |

### <Cases Where Aramid Cords Were Applied as Reinforcing Cords of Spiral Cord Layer>

The results of cases where aramid cords (cord structure: 3,340 dtex//2/3) were used as the reinforcing cords of the spiral cord layer are shown in Tables 3 and 4 below. The end count of the spiral cord layer was set at 25 cords/50 mm. Tables 3 and 4 show the results that were obtained when the angle α of the belt cords of the auxiliary belt layer with respect to the tire circumferential direction was 54.7° < α < 90° and 0° < α < 54.7°, respectively.

### <Cases where 54.7° < α < 90°>

With regard to each angle α of the belt cords of the auxiliary belt layer with respect to the tire circumferential direction, Table 3 below shows the ratios of the travel distance in the respective Examples where the inclination direction of the belt cords of the auxiliary belt layer and the inclination direction of the reinforcing cords of the upper layer of the spiral cord layer were the same, taking the travel distance of the respective Comparative Examples, where the inclination direction of the belt cords of the auxiliary belt layer and the inclination direction of the reinforcing cords of the upper layer of the spiral cord layer were different, as 100. A higher ratio of travel distance indicates a further improvement in the durability of the belt portions.

**[Table 3]**

| | Belt cords of auxiliary belt layer | Whether the inclination direction was the same or different between the belt cords of the auxiliary belt layer and the reinforcing cords of the spiral cord layer | Travel distance (ratio) |
|---|---|---|---|
| | Cord angle α(°) with respect to circumferential direction | | |
| Example 9 | 60 | same | 105 |
| Comparative Example 9 | 60 | different | 100 |
| Example 10 | 65 | same | 124 |
| Comparative Example 10 | 65 | different | 100 |
| Example 11 | 70 | same | 119 |
| Comparative Example 11 | 70 | different | 100 |
| Example 12 | 75 | same | 110 |
| Comparative Example 12 | 75 | different | 100 |

### <Cases where 0° < α < 54.7°>

With regard to each angle α of the belt cords of the auxiliary belt layer with respect to the tire circumferential direction, Table 4 below shows the ratios of the travel distance in the respective Examples where the inclination direction of the belt cords of the auxiliary belt layer and the inclination direction of the reinforcing cords of the upper layer of the spiral cord layer were different, taking the travel distance of the respective Comparative Examples, where the inclination direction of the belt cords of the auxiliary belt layer and the inclination direction of the reinforcing cords of the upper layer of the spiral cord layer were the same, as 100. A higher ratio of travel distance indicates a further improvement in the durability of the belt portions.

**[Table 4]**

| | Belt cords of auxiliary belt layer | Whether the inclination direction was the same or different between the belt cords of the auxiliary belt layer and the reinforcing cords of the spiral cord layer | Travel distance (ratio) |
|---|---|---|---|
| | Cord angle α(°) with respect to circumferential direction | | |
| Example 13 | 5 | different | 102 |
| Comparative Example 13 | 5 | same | 100 |
| Example 14 | 15 | different | 105 |
| Comparative Example 14 | 15 | same | 100 |
| Example 15 | 30 | different | 110 |
| Comparative Example 15 | 30 | same | 100 |
| Example 16 | 45 | different | 108 |
| Comparative Example 16 | 45 | same | 100 |

As shown in Tables above, it was confirmed that, according to the present invention, the occurrence of separation between the spiral cord layer and the auxiliary belt layer can be suppressed.

### DESCRIPTION OF SYMBOLS

1: spiral cord layer
1A: upper layer
1B: lower layer
2: core-material cord layer
10: tire for trucks and buses
11, 21, 31: tread portion
11a: corner
12, 22, 32: side wall portions
13, 23, 33: bead portions
14, 24, 34: carcass
15, 25, 35: bead cores
16, 26, 36: bead fillers
17, 27, 37a to 37d: auxiliary belt layer
27a: cap layer
27b: layered layer
20: tire for passenger vehicles
23a: recess
18, 39: belt under-cushion rubber
30: tire for construction vehicles
101, 102: reinforcing cord

## Claims

1. A tire (10, 20, 30) comprising:
a carcass (14, 24, 34) toroidally extending between a pair of bead portions (13, 23, 33);
a spiral cord layer (1) arranged on an outer side in a tire radial direction of a crown portion of the carcass (14, 24, 34) and in which an upper layer (1A) and a lower layer (1B) are formed by spirally winding a reinforcing cord (101, 102); and
an auxiliary belt layer (17, 27, 37a-d) arranged on the outer side in the tire radial direction of the spiral cord layer (1),
wherein an inclination direction of belt cords of the auxiliary belt layer (17, 27, 37a-d) and an inclination direction of the reinforcing cord of the upper layer (1A) of the spiral cord layer (1) are the same when an angle α of the belt cords of the auxiliary belt layer (17, 27, 37a-d) with respect to the tire circumferential direction is 54.7° < α < 90°, and the inclination directions are different when the angle α of the belt cords of the auxiliary belt layer (17, 27, 37a-d) with respect to the tire circumferential direction is 0° < α < 54.7°, **characterized by** comprising a core-material cord layer (2) between the upper layer (1A) and the lower layer (1B) of the spiral cord layer (1).

2. The tire according to claim 1, wherein an angle of the reinforcing cord of the spiral cord layer (1) is in a range of 12° to 90° with respect to the tire circumferential direction.

3. The tire (10, 20, 30) according to claim 1 or 2, wherein the core-material cords of the core-material cord layer (2) have an inclination angle of 40° to 90° with respect to the tire circumferential direction.

## Patentansprüche

1. Reifen (10, 20, 30), der Folgendes umfasst:
eine Karkasse (14, 24, 34), die sich spiralförmig zwischen einem Paar von Wulstabschnitten (13, 23, 33) erstreckt;
eine spiralförmige Kordlage (1), die auf einer in einer Reifenradialrichtung äußeren Seite eines Scheitelabschnitts der Karkasse (14, 24, 34) angeordnet ist und in der eine obere Lage (1A) und eine untere Lage (1B) durch spiralförmiges Wickeln eines Verstärkungskords (101, 102) geformt sind, und
eine zusätzliche Gürtellage (17, 27, 37a-d), die auf der in der Reifenradialrichtung äußeren Seite der spiralförmigen Kordlage (1) angeordnet ist,
wobei eine Neigungsrichtung von Gürtelkords der zusätzlichen Gürtellage (17, 27, 37a-d) und eine Neigungsrichtung des Verstärkungskords der spiralförmigen Kordlage (1) die gleichen sind, wenn ein Winkel α der Gürtelkords der zusätzlichen Gürtellage (17, 27, 37a-d) in Bezug auf die Reifenumfangsrichtung 54,7 ° < α < 90 ° ist, und die Neigungsrichtungen unterschiedlich sind, wenn der Winkel α der Gürtelkords der zusätzlichen Gürtellage (17, 27, 37a-d) in Bezug auf die Reifenumfangsrichtung 0 ° < α < 54,7 ° ist,
**dadurch gekennzeichnet, dass** er eine Kernmaterial-Kordlage (2) zwischen der oberen Lage (1A) und der unteren Lage (1B) der spiralförmigen Kordlage (1) umfasst.

2. Reifen nach Anspruch 1, wobei ein Winkel des Verstärkungskords der spiralförmigen Kordlage (1) in einem Bereich von 12 ° bis 90 ° in Bezug auf die Reifenumfangsrichtung liegt.

3. Reifen (10, 20, 30) nach Anspruch 1 oder 2, wobei die Kernmaterial-Kords der Kernmaterial-Kordlage (2) einen Neigungswinkel von 40 ° bis 90 ° in Bezug auf die Reifenumfangsrichtung aufweisen.

## Revendications

1. Bandage pneumatique (10, 20, 30), comprenant :
une carcasse (14, 24, 34) s'étendant toroïdalement entre une paire de parties de talon (13, 23, 33) ;
un couche de câblés en spirale (1) agencée sur un côté externe, dans une direction radiale du bandage pneumatique, d'une partie de sommet de la carcasse (14, 24, 34) et dans laquelle une couche supérieure (1A) et une couche inférieure (1B) sont formées en enroulant en spirale un câblé de renforcement (101, 102) ; et
une couche de ceinture auxiliaire (17, 27, 37a-d) agencée sur un côté externe, dans la direction radiale du bandage pneumatique, de la couche de câblés en spirale (1) ;
dans lequel une direction d'inclinaison des câblés de ceinture de la couche de ceinture auxiliaire (17, 27, 37a-d) et une direction d'inclinaison du câblé de renforcement de la couche supérieure (1A) de la couche de câblés en spirale (1) sont identiques lorsqu'un angle α des câblés de ceinture de la couche de ceinture auxiliaire (17, 27, 37a-d) par rapport à la direction circonférentielle correspond à 54,7° < α < 90°, et les directions d'inclinaison sont différentes lorsque l'angle α des câblés de ceinture de la couche de ceinture auxiliaire (17, 27, 37a-d) par rapport à la direction circonférentielle correspond à 0° < α < 54,7°,
**caractérisé en ce qu'**il comprend une couche de câblés en matériau de noyau (2) entre la couche supérieure (1A) et la couche inférieure (1B) de la couche de câblés en spirale (1).

2. Bandage pneumatique selon la revendication 1, dans lequel un angle du câblé de renforcement de la couche de câblés en spirale (1) est compris dans un intervalle allant de 12° à 90° par rapport à la direction circonférentielle du bandage pneumatique.

3. Bandage pneumatique (10, 20, 30) selon la revendication 1 ou 2, dans lequel les câblés en matériau de noyau de la couche de câblés en matériau de noyau (2) forment un angle d'inclinaison compris entre 40° et 90° par rapport à la direction circonférentielle du bandage pneumatique.
